# EUROPÄISCHE PATENTSCHRIFT

(11) **EP 4 609 013 B1**
(45) Veröffentlichungstag und Bekanntmachung des Hinweises auf die Patenterteilung: **09.12.2026**
(21) Anmeldenummer: 23801294.2
(22) Anmeldetag: 17.10.2023
(51) Int. Cl.: C25B 9/75, C25B 1/23, C25B 3/26, C25B 9/77, H01M 8/0273

(54) **DREIKAMMERZELLE**
THREE-CHAMBER CELL
CELLULE À TROIS CHAMBRES

(30) Priorität: 25.10.2022 AT 601662022; 28.11.2022 AT 509012022
(43) Veröffentlichungstag der Anmeldung: 03.09.2025
(73) Patentinhaber: GKT GmbH, 2640 Gloggnitz (AT)
(72) Erfinder: Schoefberger, Wolfgang, 4040 Linz (AT); Sun, He, 4020 Linz (AT)
(74) Vertreter: Wirnsberger & Lerchbaum Patentanwälte OG
(86) Internationale Anmeldenummer: PCT/AT2023/060353
(87) Internationale Veröffentlichungsnummer: WO 2024/086864

(56) Entgegenhaltungen:
- CN-A- 114 908 370
- US-A- 4 137 136
- US-A- 6 080 503
- US-A1- 2016 153 560

## Beschreibung

Die Erfindung betrifft eine Dreikammerzelle zur elektrokatalytischen Reduktion von Gasen, welche sich für die Bildung eines Zellstapels eignet.

Der Aufbau der Zelle ermöglicht somit den Bau eines elektrochemischen Dreikammerzellstapels.

Der Dreikammerzellstapel kann insbesondere als Reaktor zur Elektrokatalyse verwendet werden.

Als Zellstapel wird die Aneinanderreihung von mehreren Zellen zu einem Block verstanden. Ein Dreikammerzellstapel ist somit ein Block umfassend mehrere einzelne Dreikammerzellen.

Es gibt nach dem Stand der Technik sowohl "zero-gap" Zellen und "zero-gap" Zellstapel (nur für gasförmige Produkte), sowie auch einzelne elektrochemische Zellen in der "three-compartment" Zellausführung (auch "Dreikammerzelle" genannt, für flüssig und gasförmige Produkte).

Die Erfindung betrifft insbesondere eine Dreikammerzelle für die elektrokatalytische CO2 und N2 Umsetzung/Reduktion zu flüssigen und gasförmigen Produkten.

In Folge wird der Aufbau von nach dem Stand der Technik bekannten Dreikammerzellen kurz beschrieben.

Kernstück der Dreikammerzelle ist eine Gasdiffusionselektrode, welche sich zwischen einer Katholyt-Kammer und einer Gas-Kammer der Dreikammerzelle befindet. Die dritte Kammer der Dreikammerzelle ist die Anolyt-Kammer.

Die Gaskammer liegt an der Rückseite der Gasdiffusionselektrode vor. Die Gaskammer ist dabei nach dem Stand der Technik typischerweise aus Isoliermaterial gefertigt und daher nicht elektrisch leitfähig. Eine Dreikammerzelle nach dem Stand der Technik umfasst zudem Dichtungen, welche ebenfalls aus Isoliermaterial gefertigt und daher nicht elektrisch leitfähig sind.

An der anderen Seite der Gasdiffusionselektrode liegt die erste Flüssigkeitskammer bzw. Elektrolytkammer vor, welche aufgrund der Anordnung an der Kathode (Gasdiffusionselektrode) als Katholyt-Kammer bezeichnet wird. Katholyt ist eine Wortkombination aus Kathode und Elektrolyt.

An der Anode liegt die zweite Flüssigkeitskammer bzw. Elektrolytkammer vor, welche aufgrund der Anordnung an der Anode als Anolyt-Kammer bezeichnet wird. Anolyt ist eine Wortkombination aus Anode und Elektrolyt.

Die Anolyt-Kammer und die Katholyt-Kammer sind durch eine Membran getrennt.

Die Gasdiffusionselektrode kommt an einer Seite mit dem Gas und an der anderen Seite mit dem flüssigen Elektrolyten (Katholyt) in Kontakt, was hochwertige Dichtungsmaterialien erfordert, die normalerweise nichtleitend sind.

Daher ist die bei einem Zellstapel benötigte Reihenschaltung zwischen der Gasdiffusionselektrode einer ersten Zelle des Stapels mit der Anode einer anschließenden zweiten Zelle des Stapels nicht einfach umsetzbar.

Beim bekannten Zellstapel ist es üblich, dass jeder Bestandteil in Form einer flachen Scheibe oder eines flachen Rings vorliegt, wobei sich jeder Bestandteil bis an den Außenumfang des Stapels erstreckt. Am Außenumfang des Stapels werden die Bestandteile aneinandergepresst, sodass dieselbe Kraft auf jede Dichtung des Stapels, insbesondere auch die Dichtung der Gasdiffusionselektrode, wirkt.

Das Dokument CN 114 908 370 A beschreibt ein Herstellungsverfahren und die Anwendung eines molekularen Katalysators zur CO2-Reduktion auf Kupferbasis, wobei weiter in einem Ausführungsbeispiel eine Dreikammer-Durchfluss-Elektrolysezelle zur CO₂-Reduktion offenbart ist. Diese umfasst eine CO2-Gasströmungskammer, einen Kathodenkatalysator, eine Kathodenelektrolytströmungskammer, eine Ionentransportmembran, einen Anodenkatalysators und eine Anodenelektrolytströmungskammer, wobei zwischen den Elementen Silikondichtungen angeordnet sind und endseitig an der Anodenelektrolytströmungskammer eine weitere Dichtung angeordnet ist. Die positiven und negativen Elektroden der Stromversorgung sind jeweils mit den Außenflächen der Anoden-Gegenelektrode und der CO2-Gasströmungskammer verbunden.

In dem Dokument US 4 137 136 A sind eine Elektrolysezelle und ein Verfahren zur Elektrolyse einer wässrigen Alkalimetallhalogenidlösung in einer Dreikammer-Elektrolysezelle beschrieben. Die Dreikammer-Elektrolysezelle umfasst eine obere, durch eine Kationenaustauschmembran begrenzte Kathodenkammer, eine mittlere Kammer und eine untere, durch ein Diaphragma begrenzte Anodenkammer, wobei eine Dreikammer-Elektrolysezelle als Einheitszelle bezeichnet wird. Die Verbindung und Dichtung erfolgt über eine Pressverbindung. Durch vertikale Stapelung dieser Einheitszellen, über eine Verbindung der Kathode und Anode und über eine über eine Leitung für Alkalimetallhydroxidlösung ist die Ausbildung einer mehrteiligen Elektrolysezelle möglich, wodurch eine Parallelschaltung der Zellen möglich ist.

Das Dokument US 6 080 503 A offenbart einen elektrochemischen Zellstapel, umfassend eine Anordnung Membranelektrodenanordnungen, die zwischen Paaren von Trennplatten angeordnet sind, wobei diese für eine gas- und flüssigkeitsdichte Ausführung über ein Haftmittel miteinander verbunden sind.

In dem Dokument US 2016/153560 A1 wird eine Dichtung für eine Elektrolysezelle und eine mit einer solchen Dichtung versehene Elektrolysezelle beschrieben, wobei die Dichtung durch ihre Ausführung im Vergleich zu herkömmlichen in diesem Feld eingesetzten Dichtungen unter anderem eine höhere mechanische Festigkeit aufweist, Leckagen reduziert, Kriech- und Knickeffekte vermindert und eine kostengünstige Herstellung ermöglicht. Die Dichtung umfasst dabei einen Kern mit einer Umhüllung, wobei die Umhüllung eine elektrische Isolierung von miteinander in Kontakt stehenden Elementen ermöglicht.

Die der Erfindung zu Grunde liegende Aufgabe besteht darin, einen Aufbau einer Dreikammerzelle bereit zu stellen, der die Bildung eines Dreikammerzellstapels mit in Reihe geschalteten Zellen ermöglicht.

Für das Lösen der Aufgabe wird vorgeschlagen, die Gaskammer durch eine leitfähige strukturierte Fließplatte zu bilden, welche über eine leitfähige Dichtung an der Gasdiffusionselektrode anliegt.

Für das Lösen der Aufgabe wird insbesondere eine Dreikammerzelle gemäß Anspruch 1 vorgeschlagen.

Eine Ausführungsvariante der Erfindung besteht in einer Dreikammerzelle, welche die Bildung eines Dreikammerzellstapels mit in Reihe geschalteten Zellen ermöglicht, wobei die Dreikammerzelle eine Gasdiffusionselektrode, eine Fließplatte, einen Fließrahmen, zumindest eine elektrisch leitende Dichtung, eine Anode und eine Membran umfasst, wobei die leitende Dichtung beidseits an der Gasdiffusionselektrode vorliegt, wobei die beiden Seiten der Dichtung in elektrisch-leitendem Kontakt zueinander stehen und wobei die Dichtung an der Fließplatte anliegt, wobei an der gegenüberliegenden Seite der Fließplatte eine Anlagestelle für die Anode einer nachfolgenden Dreikammerzelle vorliegt und wobei die Anlagestelle über die Fließplatte in elektrisch-leitendem Kontakt mit der Dichtung steht.

Bevorzugt wird, dass die Fließplatte zur Gänze aus elektrisch-leitendem Material besteht.

Bevorzugt wird, dass an der der Gasdiffusionselektrode zugewandt liegenden Seite der Fließplatte eine Vertiefung vorliegt, in welcher die Gasdiffusionselektrode mit deren Dichtungen Platz findet und wobei am Grund der Vertiefung eine Gasleitstruktur vorliegt.

Die Gasleitstruktur ist bevorzugt fest, insbesondere monolithisch mit der Fließplatte verbunden. Die Gasleitstruktur kann beispielsweise aus dem Material der Fließplatte gefräst werden.

An der anderen Seite der Fließplatte liegt eine Flüssigkeitsleitstruktur als Anolytleitstruktur vor. Bevorzugt ist diese fest, insbesondere monolithisch mit der Fließplatte verbunden. Die Anolytleitstruktur kann beispielsweise aus dem Material der Fließplatte gefräst werden.

Bevorzugt wird, dass an der der Anode zugewandt liegenden Seite der Fließplatte eine Vertiefung vorliegt, in welcher die Anode Platz findet und wobei am Grund der Vertiefung eine Flüssigkeitsleitstruktur vorliegt.

Bevorzugt wird, dass die elektrisch leitfähige Dichtung aus zwei die Gasdiffusionselektrode umlaufenden Dichtungen besteht, welche die Gasdiffusionselektrode in Umfangsrichtung überragen und im Bereich außerhalb der Gasdiffusionselektrode miteinander verbunden sind, wobei der äußere Randbereich der Gasdiffusionselektrode zwischen den beiden Dichtungen eingeschlossen ist.

Bevorzugt wird, dass der Fließrahmen gegenüber der Fließplatte an der Dichtung anliegt, wobei der Fließrahmen einen erhabenen Bereich aufweist, welcher in die Vertiefung der Fließplatte ragt, in welcher die Gasdiffusionselektrode mit der Dichtung vorliegt.

Bevorzugt wird, dass die der Gasdiffusionselektrode zugewandte Seite der Fließplatte zumindest drei Ebenen umfasst, wobei die unterste erste Ebene durch den Grund einer Gasleitstruktur gebildet ist, wobei die mittlere zweite Ebenen eine die Gasleitstruktur umlaufende Auflagefläche für die Gasdiffusionselektrode und deren Dichtung umfasst, wobei die dritte obere Ebene die äußere Fläche einer Erhebung umfasst, welche die Auflagefläche umläuft.

Bevorzugt wird, dass die Erhebung von einer Vertiefung umgeben ist.

Bevorzugt wird, dass die obere Fläche von Stegen der Gasleitstruktur in der mittleren zweiten Ebene liegt.

Bevorzugt wird, dass die Fließplatte zwei Durchleitungen für Gas umfasst, wobei ausgehend von jeder Durchleitung zumindest ein horizontaler Gasleitkanal in die Gasleitstruktur führt.

Bevorzugt wird, dass an den beiden Durchleitungen für Gas jeweils ein Aufnahmeraum für ein Insert vorliegt, wobei der jeweilige horizontale Gasleitkanal vom Aufnahmeraum zur Gasleitstruktur führt und wobei das Insert eine Verbindung von der vertikalen Durchleitung zum horizontaler Gasleitkanal umfasst.

Bevorzugt wird, dass zwei Arten von Inserts einsetzbar sind, wobei die erste Art ein geschlossenes Dach aufweist, sodass die Durchleitung zur nächsten Zelle verschlossen ist und die zweite Art zumindest eine Öffnung im Dach aufweist, sodass die Durchleitung zur nächsten Zelle offen ist.

Bevorzugt wird, dass die Fließplatte und der Fließrahmen Durchleitungen für den Anolyt, den Katholyt und das Gas umfassen, welche horizontal gesehen außerhalb jenes Bereichs der Fließplatte vorliegen, in welchem die Gasdiffusionselektrode vorliegt.

Bevorzugt wird, dass die Membran zwischen zwei Dichtungen vorliegt, wobei die Dichtungen Durchleitungen für den Anolyt, den Katholyt und das Gas umfassen, welche horizontal gesehen außerhalb jenes Bereichs der Fließplatte vorliegen, in welchem die Gasdiffusionselektrode vorliegt.

Die Durchleitungen für den Anolyt, den Katholyt und das Gas liegen bevorzugt bei folgenden Komponenten der Wiederholeinheit vor: Fließplatte, Fließrahmen, die Dichtungen der Membran. Die Durchleitungen liegen deckungsgleich vor, sodass diese vertikale Kanäle durch die Zelle bzw. alle Zellen eines Zellenstapels bilden. Die Anode und die Gasdiffusionselektrode mit deren Dichtungen und bevorzugt auch die Membran weisen keine Durchleitungen auf. Die Anode und die Gasdiffusionselektrode mit deren Dichtungen und bevorzugt auch die Membran befinden sich horizontal gesehen in jenem Flächenbereich, welcher zwischen den Durchleitungen liegt.

Die Gasleitstruktur weist je eine Verbindung zu jeder der beiden Gasdurchleitungen auf. Die Anolytleitstruktur weist eine Verbindung zu jeder der beiden Anolytdurchleitungen auf. Die Katholytleitstruktur weist eine Verbindung zu jeder der beiden Katholytdurchleitungen auf.

Dadurch erfolgt der Fluss des jeweiligen Mediums von einer ersten Durchleitung über die jeweilige Leitstruktur zu einer zweiten Durchleitung.

Die Verbindung kann durch Kanäle erfolgen, welche nach außen offen an der Oberfläche der Fließplatte oder des Fließrahmens vorliegen oder durch Kanäle bzw. Bohrungen, welche im Material der Fließplatte oder des Fließrahmens eingeschlossen verlaufen.

Die Erfindung betrifft in einer Ausführungsvariante einen Dreikammerzellstapel, wobei dieser aus mehreren gegenständlichen Dreikammerzellen zusammengesetzt ist.

Bevorzugt wird, dass die Fließplatte einer ersten der beiden äußersten Dreikammerzellen des Zellstapels durch eine Kathodenendplatte ersetzt ist und die Fließplatte der zweiten der beiden äußersten Dreikammerzellen des Zellstapels durch eine Anodenendplatte ersetzt ist.

Die Erfindung betrifft in einer Ausführungsvariante die Verwendung eines erfindungsgemäßen Dreikammerzellstapels als Reaktor zur Elektrokatalyse.

Die Struktur der Fließplatte bildet zumindest einen Strömungspfad für das Gas von einem Eingang zu einem Ausgang an der Fließplatte. Die Struktur bzw. der Strömungspfad dient dazu, um das vom Eingang kommende Gas möglichst gleichmäßig über die Fläche der Gasdiffusionselektrode zu verteilen.

Die Fließplatte umfasst einen soliden Körper, welcher die an der ersten Seite der Fließplatte vorliegende Gaskammer von der an der Rückseite der Fließplatte vorliegenden Anolytkammer abtrennt. An der Rückseite der Fließplatte liegt bevorzugt ebenfalls eine Struktur vor. Diese Struktur bildet zumindest einen Strömungspfad für den flüssigen Anolyt von einem Eingang zu einem Ausgang an der Fließplatte. Der Fluss des Anolyten und des Gases erfolgt jeweils parallel zur Fläche der Gasdiffusionselektrode.

An der anderen Seite der Gasdiffusionselektrode liegt wie nach dem Stand der Technik üblich eine Flüssigkeitskammer in Form der Katholyt-Kammer vor, welche durch einen Fließrahmen gebildet ist. Der Fließrahmen liegt von der anderen Seite her an einer der leitfähigen Dichtungen der Gasdiffusionselektrode an. Der Fließrahmen ist im Gegensatz zur Fließplatte offen, also weist Öffnungen auf, welche sich durch den Grundkörper des Fließrahmens erstrecken. Dadurch wird eine Katholyt-Kammer geschaffen, welche sich zwischen der Gasdiffusionselektrode und der Membran befindet, die an der anderen Seite des Fließrahmens vorliegt und diesen von der Anode abtrennt. Der Fließrahmen weist einen Eingang und einen Ausgang für den Katholyt auf. Der Fluss des Katholyt erfolgt parallel zu den beiden gegenüberliegenden Flächen des Fließrahmens. Ein Stromfluss bzw. Ionenfluss durch den Katholyt von der Anode zur Kathode (Gasdiffusionselektrode) wird durch die Öffnungen des Fließrahmens ermöglicht.

Der Fließrahmen kann aus elektrisch-isolierendem Material gebildet sein. Der Fließrahmen besteht bevorzugt aus Kunststoff, beispielsweise Polytetrafluorethylen (PTFE), Polyetheretherketon (PEEK) oder Polymethylmethacrylat (PMMA).

Die Fließplatte umfasst elektrisch leitendes Material oder ist zur Gänze aus leitfähigem Material gebildet, wobei ein Stromfluss zwischen der ersten flächigen Seite der Fließplatte und der zweiten flächigen Seite der Fließplatte ermöglicht wird. Da an der ersten flächigen Seite der Fließplatte die Kathode in Form der Gasdiffusionselektrode (einer ersten Zelle) über die leitende Dichtung anliegt und an der anderen flächigen Seite der Fließplatte die Anode (einer zweiten Zelle) anliegt, wird eine Reihenschaltung des Zellstapels erreicht. Das Material der Fließplatte kann ausgewählt sein aus leitfähigem Kunststoff, Metall oder Graphit. Konkrete nicht abschließende Beispiele sind mit Gold beschichtete Metalle, insbesondere goldbeschichtetes Messing, rostfreier Stahl oder Titan. Die Fließplatte kann zur Gänze aus leitfähigem Material bestehen, oder aus einer Kombination von leitfähigem Material und nicht-leitfähigem Material. Beispielsweise kann ein leitfähiges Material, welches sich durch die Fließplatte hindurch zwischen Anode und der leitfähigen Dichtung erstreckt, in einem nichtleitfähigen Material, wie Kunststoff, eingesetzt oder eingegossen sein.

Es wird bevorzugt, dass die Dichtung die Gasdiffusionselektrode am Außenumfang überragt und umschließt. Dadurch werden die beiden gegenüberliegenden Oberflächen der Gasdiffusionselektrode über die Dichtung elektrisch leitend verbunden. Dadurch ist auch ein Stromfluss zwischen der Fließplatte und der der Fließplatte abgewandten Seite der Gasdiffusionselektrode möglich. Dies ist insbesondere relevant, da Gasdiffusionselektroden existieren, die nur an einer ihrer beiden gegenüberliegenden Oberflächen aus leitfähigem Material bestehen.

Der Fließrahmen und die Fließplatte liegen jeweils im Zellstapel von unterschiedlichen Seiten über eine nicht-leitende Dichtung an der Membran an. Die Anode befindet sich zwischen der Membran und der Fließplatte, wobei die Anode in einer Vertiefung der Fließplatte vorliegt und von dieser umschlossen ist. Die Anode ist bevorzugt in leitendem Kontakt mit der der Anode zugewandten Struktur der Fließplatte.

Ob ein leitender Kontakt zwischen der Gasdiffusionselektrode und der der Gasdiffusionselektrode zugewandten Struktur der Fließplatte möglich ist, hängt von den Eigenschaften der verwendeten Gasdiffusionselektrode ab. Ein Stromfluss wird aber an dieser Stelle nicht benötigt, da dieser über die leitfähige Dichtung erreicht wird. Zwischen der Struktur der Fließplatte und der Gasdiffusionselektrode kann auch ein Spalt vorliegen.

Die leitfähige Dichtung ist aus einem elastisch verformbaren, leitfähigen Material gebildet. Leitfähige Elastomere sind nach dem Stand der Technik bekannt. Beispielsweise kann die Dichtung aus einer Mischung aus leitfähigem Kohlenstoff, PTFE-Pulver und einem Binder gefertigt werden, insbesondere durch Heiß-Pressen. Auch Graphitdichtungen können verwendet werden.

Vorteilhaft an der gegenständlichen Erfindung gegenüber dem Stand der Technik ist, dass diese den Bau neuartiger elektrochemischer Dreikammerzellstapel ermöglicht, zur hocheffizienten kathodenseitigen Erzeugung von flüssigen und gasförmigen Produkten während der elektrokatalytischen CO2 Reduktion.

Eine einzelne Zelle liegt somit mit folgendem Aufbau vor: leitfähige strukturierte Fließplatte - leitfähige Dichtung - Gasdiffusionselektrode - leitfähige Dichtung - Fließrahmen - Membran - Anode.

Bei zwei aufeinanderfolgenden Zellen ist die Anode einer Zelle leitend mit der Gasdiffusionselektrode der zweiten Zelle verbunden und zwar über die dazwischenliegende leitfähige strukturierte Fließplatte und die leitfähige Dichtung.

Die Zellen liegen in bipolarer Verschaltung, also in serieller elektrischer Verschaltung vor, so dass alle Zellen vom gleichen Stapelstrom durchflossen werden und die Stapelspannung die Summe der Zellspannungen ist.

Die Erfindung wird an Hand von schematischen Zeichnungen veranschaulicht:
- Fig. 1:: zeigt schematisch eine Kathoden-Untereinheit einer gegenständlichen Dreikammerzelle.
- Fig. 2:: zeigt schematisch eine Gasdiffusionselektrode mit Dichtungen einer gegenständlichen Dreikammerzelle.
- Fig. 3:: Zeigt schematisch das Zusammenfügen einer Elektroden-Untereinheit und einer Anoden-Untereinheit.
- Fig. 4:: Zeigt schematisch einen Zellstapel aus gegenständlichen Dreikammerzellen.
- Fig. 5:: Zeigt schematisch eine Detailansicht einer gegenständlichen Dreikammerzelle.
- Fig. 6:: Zeigt eine Explosionsdarstellung einer besonders bevorzugten Variante einer Dreikammerzelle in Ansicht aus einer ersten Richtung.
- Fig. 7:: Zeigt eine Explosionsdarstellung der besonders bevorzugten Variante einer Dreikammerzelle in Ansicht aus der zweiten Richtung.
- Fig. 8:: Zeigt eine Explosionsdarstellung einer besonders bevorzugten Variante eines Dreikammerzellstapels in Ansicht aus einer ersten Richtung.
- Fig. 9:: Zeigt eine Explosionsdarstellung der besonders bevorzugten Variante eines Dreikammerzellstapels in Ansicht aus der zweiten Richtung.
- Fig. 10:: Zeigt einer besonders bevorzugten Variante einer ersten Seite einer Fließplatte.
- Fig. 11:: Zeigt einer besonders bevorzugten Variante einer zweiten Seite einer Fließplatte.
- Fig. 12:: Zeigt einer besonders bevorzugten Variante einer ersten Seite eines Fließrahmens.
- Fig. 13:: Zeigt einer besonders bevorzugten Variante einer zweiten Seite eines Fließrahmens.

Die Richtungsangabe senkrecht oder vertikal bezieht sich hierin auf die Richtung, welche senkrecht auf die Ebene der Gasdiffusionselektrode 1 steht, was der Längsrichtung des Zellstapels entspricht. Mit horizontal wird die Richtung parallel zur Ebene der Gasdiffusionselektrode 1 bezeichnet.

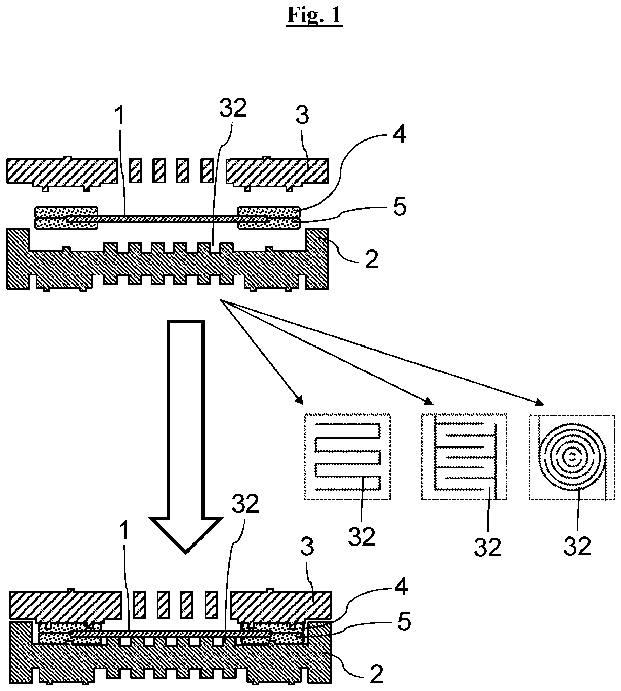

In Fig. 1 ist schematisch veranschaulicht, wie eine Gasdiffusionselektrode 1, eine Fließplatte 2 und ein Fließrahmen 3 zu einer Kathoden-Untereinheit zusammengesetzt werden können.

Die Gasdiffusionselektrode 1 kann gemäß dem Stand der Technik ausgeführt sein. Diese ist erfindungsgemäß mit einer elektrisch leitenden Dichtung 4, 5 versehen. Wie dargestellt, kann die Dichtung aus einer ersten leitenden Dichtung 4 und einer zweiten leitenden Dichtung 5 zusammengesetzt sein.

Die Fließplatte 2 weist eine Vertiefung auf, in welcher die Gasdiffusionselektrode 1 mit deren Dichtungen 4, 5 Platz findet, wobei die zweite leitende Dichtung 5 am Grund der Vertiefung anliegt. Der Grund der Vertiefung kann zumindest einen erhabenen Steg aufweisen, welcher beim Zusammenpressen der Komponenten in die Dichtung 5 eingedrückt wird. Der Steg kann sich in einem Bereich befinden, in welchem sich die Gasdiffusionselektrode 1 zwischen den Dichtungen 4, 5 befindet.

Im Bereich zwischen den umlaufenden Dichtungen 4, 5 liegt die Gasdiffusionselektrode 1 frei. In diesem Bereich ist am Grund der Vertiefung der Fließplatte 2 eine erhabene Struktur angeordnet, welche als Gasleitstruktur 32 dient.

Gegenüber der Fließplatte 2 liegt an der anderen Seite der Gasdiffusionselektrode 1 der Fließrahmen 3 vor. Dieser umfasst bevorzugt einen umlaufenden Rahmen, dessen Rahmenschenkel durch Materialbrücken verbunden sind. Zwischen den Materialbrücken weist der Fließrahmen 3 Öffnungen auf, welche sich von einer Fläche des Fließrahmens 3 zu seiner gegenüberliegenden Fläche erstrecken.

Bevorzugt weist der Fließrahmen 3 eine Erhöhung auf, welche korrespondierend zur Vertiefung der Fließplatte 2 vorliegt. Im zusammen-gepressten Zustand ragt die Erhöhung des Fließrahmens 3 bevorzugt in die Vertiefung der Fließplatte 2. Die Erhöhung liegt an der ersten Dichtung 4 an. Die Oberfläche der Erhöhung kann zumindest einen erhabenen Steg aufweisen, welcher beim Zusammenpressen der Komponenten in die Dichtung 4 eingedrückt wird. Im Beispiel der Fig. 1 sind zwei parallele Stege an der Erhöhung vorhanden. Der innere Steg kann sich in einem Bereich befinden, in welchem sich die Gasdiffusionselektrode 1 zwischen den Dichtungen 4, 5 befindet. Der äußere Steg kann sich in einem Bereich befinden, in welchem die Dichtungen 4, 5 direkt aneinander anliegen.

In Fig. 1 sind beispielhafte Strukturen veranschaulicht, welche als Gasleitstruktur 32 und/oder als Flüssigkeitsleitstruktur an der Fließplatte 2 vorliegen können.

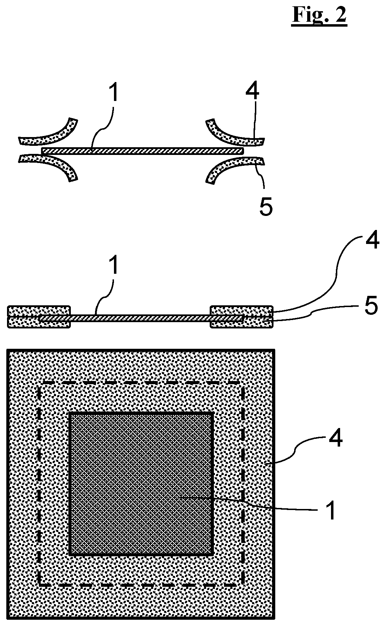

In Fig. 2 ist ein mögliches Herstellungsverfahren der Gasdiffusionselektrode 1 mit deren Dichtungen 4, 5 veranschaulicht. Die Dichtungen 4, 5 liegen dabei jeweils als rahmenförmiges Flachmaterial vor. Der jeweilige Rahmen ist so ausgeführt, dass dessen Außenkante außerhalb des Umfangs der Gasdiffusionselektrode 1 liegt und dass dessen Innenkante innerhalb des Umfangs der Gasdiffusionselektrode 1 liegt. Im Beispiel der Fig. 2 sind die Gasdiffusionselektrode 1 und die Dichtungen 4, 5 quadratisch ausgeführt, wie in der Ansicht von oben erkennbar ist. Andere Formen sind aber nicht ausgeschlossen, beispielsweise könnte die Gasdiffusionselektrode 1 rechteckig, rund, oval oder polygonal vorliegen.

Die äußere Form der Fließplatte 2 und des Fließrahmens 3 kann der Form der Gasdiffusionselektrode 1 entsprechen oder unterschiedlich vorliegen. Beispielsweise könnte eine runde Gasdiffusionselektrode 1 in eine runde Vertiefung einer eckigen Fließplatte 2 eingesetzt sein.

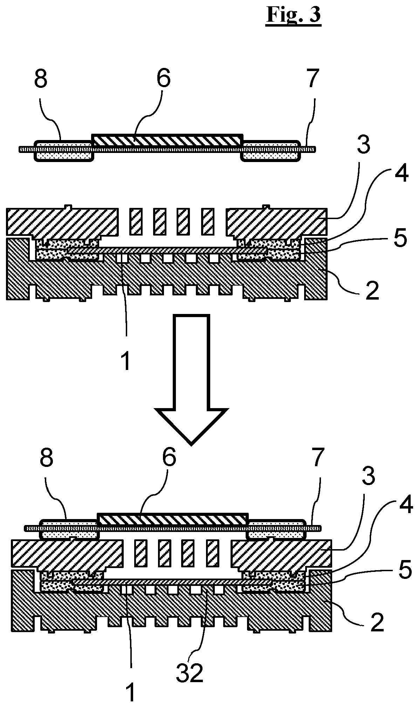

Fig. 3 veranschaulicht wie die zuvor zusammengesetzte Kathoden-Untereinheit mit einer Anoden-Untereinheit zusammengesetzt wird, zur Bildung einer Wiederholeinheit zur Bildung von Zellstapeln.

Die Anoden-Untereinheit umfasst die Anode 6, welche an einer Membran 7 vorliegt. Die Anode 6 kann fest mit der Membran 7 verbunden, beispielsweise verpresst sein. Die Membran 7 überragt die Anode 6 und weist in dem die Anode 6 überragenden Bereich eine Dichtung 8 auf. Wie dargestellt kann je eine Dichtung 8 an den beiden gegenüberliegenden Seiten der Membran 7 vorliegen. Die Membran 7 kann seitlich aus der Dichtung 8 bzw. zwischen den Dichtungen 8 hervorragen. Die Dichtung 8 ist aus elektrisch isolierendem Material gebildet. Weniger bevorzugt kann die Membran 7 direkt zwischen der Fließplatte 2 und dem Fließrahmen 3 vorliegen, wenn deren Material eine Abdichtung erlaubt oder im Bereich außerhalb der Membran 7 eine Dichtung direkt zwischen der Fließplatte 2 und dem Fließrahmen 3 vorliegt.

Im Beispiel der Fig. 3 wird die Anoden-Untereinheit an der freien Seite des Fließrahmens 3 platziert. Es wäre aber auch denkbar die Anoden-Untereinheit an der freien Seite der Fließplatte 2 zu platzieren, da es für die Wiederholeinheit des Stapels letztlich nur entscheidend ist, dass diese alle Komponenten zur Bildung einer Dreikammerzelle aufweist.

Die der Membran 7 zugewandte Seite des Fließrahmens 3 ist bevorzugt flach (ohne Erhebung oder Vertiefung) ausgeführt. Im Bereich der Dichtung 8 liegt bevorzugt zumindest erhabener Steg vor, welcher beim Zusammenpressen der Komponenten in die Dichtung 8 eingedrückt wird.

Eine fertige Wiederholeinheit umfasst folgende Komponenten: Anode 6; Membran 7; Dichtung(en) 8; Fließrahmen 3; Dichtung(en) 4, 5; Gasdiffusionselektrode 1; Fließplatte 2.

Damit aus einer Wiederholeinheit eine Dreikammerzelle wird, ist es notwendig, diese an der Unterseite zu verschließen, indem dort eine weitere Wiederholeinheit platziert wird, oder die Fließplatte 2 durch eine Kathoden-Endplatte 9 ersetzt wird.

Das Verschließen der Unterseite der Fließplatte 2 erfolgt durch die Membran 7. Bevorzugt weist die Fließplatte 2 an der der Membran 7 zugewandten Seite eine innere Vertiefung auf, an deren Grund eine erhabene Struktur vorliegt, welche als Flüssigkeitsleitstruktur des Anolyten dient. An dieser Struktur liegt die Anode 6 an. Die Anode 6 befindet sich bei zusammengepressten Komponenten in der inneren Vertiefung der Fließplatte 2. Außen um die innere Vertiefung folgt ein gegenüber der inneren Vertiefung erhabener Bereich, welcher an der Dichtung 8 anliegt. Die Oberfläche des erhabenen Bereichs kann zumindest einen erhabenen Steg aufweisen, welcher beim Zusammenpressen der Komponenten in die Dichtung 8 eingedrückt wird. Im Beispiel der Fig. 3 sind zwei parallele Stege am erhabenen Bereich vorhanden.

Allgemein wird bevorzugt, dass an einer Seite der jeweiligen Dichtung 4,5 und Dichtung 8 ein Steg vorhanden ist und an der anderen Seite der jeweiligen Dichtung 4,5 und Dichtung 8 zwei Stege vorhanden sind.

Um den erhabenen Bereich, der die innere Vertiefung umgibt, kann eine umlaufende Vertiefung vorliegen, wobei außen um die umlaufende Vertiefung ein zweiter erhabener Bereich vorliegt. Der zweite erhabene Bereich kann weiter von der Fließplatte hervorragen als der zuvor beschriebene erhabene Bereich an welchem die Dichtung 8 anliegt. Der zweite erhabene Bereich kann spiegelgleich zu jener Erhebung vorliegen, welcher an der anderen Seite der Fließplatte 2 jene Vertiefung umgibt, in welcher die Gasdiffusionselektrode 1 eingesetzt wird.

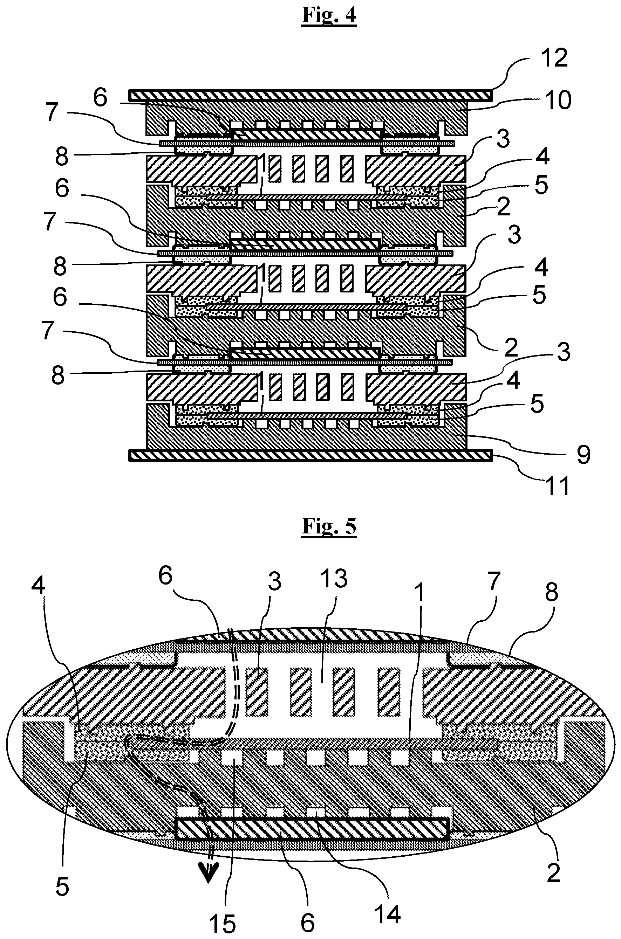

In Fig. 4 ist ein beispielhafter Zellstapel veranschaulicht. Dieser kann aus beliebig vielen Wiederholeinheiten bzw. Dreikammerzellen zusammengesetzt sein.

Wie dargestellt wird ein Ende des Stapels durch eine Kathoden-Endplatte 9 begrenzt und das andere Ende des Stapels durch eine Anoden-Endplatte 10. Die Kathoden-Endplatte 9 ist an einer Seite entsprechend jener Seite der Fließplatte 2 ausgeführt, an welcher die Gasdiffusionselektrode 1 vorliegt. Die andere Seite ist beispielsweise flach bzw. eben ausgeführt. Die Anoden-Endplatte 10 ist an einer Seite entsprechend jener Seite der Fließplatte 2 ausgeführt, an welcher die Anode 6 vorliegt. Die andere Seite ist beispielsweise flach bzw. eben ausgeführt.

An der Kathoden-Endplatte 9 kann ein Kathoden- Stromabnehmer 11 vorliegen.

An der Anoden-Endplatte 10 kann ein Anoden-Stromabnehmer 12 vorliegen.

Durch Anlegen einer Spannung zwischen den Endplatten 9, 10 bzw. deren Stromabnehmern 11, 12 erfolgt ein Stromfluss durch den Zellstapel.

In Fig. 5 ist eine Detailansicht einer Dreikammerzelle des Zellstapels dargestellt, wobei der Stromfluss durch einen Pfeil veranschaulicht ist.

Wie dargestellt umfasst die Dreikammerzelle eine Katholyt-Kammer 13, welche zwischen der Membran 7 und der Gasdiffusionselektrode 1 vorliegt und seitlich durch den Fließrahmen 3 begrenzt ist. Die Katholyt-Kammer 13 ist seitlich durch die Dichtung 8 und die Dichtung 4 abgedichtet.

Die Dreikammerzelle umfasst eine Anolyt-Kammer 14, welche zwischen der Anode 6 und der Fließplatte 2 vorliegt, wobei die Fließplatte 2 auch die seitliche Begrenzung der Anolyt-Kammer 14 bildet. Die Anolyt-Kammer 14 ist seitlich durch die Dichtung 8 abgedichtet.

Die Dreikammerzelle umfasst eine Gas-Kammer 15, welche zwischen der Gasdiffusionselektrode 1 und der Fließplatte 2 vorliegt, wobei die Fließplatte 2 auch die seitliche Begrenzung der Gas-Kammer 15 bildet. Die Gas-Kammer 15 ist seitlich durch die Dichtung 5 abgedichtet.

In Fig. 5 ist durch den Pfeil der Stromfluss durch die Dreikammerzelle veranschaulicht. Der Fluss durch die Membran 6, also der Fluss zwischen Anolyt und Katholyt, erfolgt dabei durch Ionentransport. Bevorzugt ist jene Seit der Gasdiffusionselektrode 1, die dem Katholyt zugewandt liegt leitend ausgeführt und die andere Seite isolierend oder weniger leitfähig. Der Stromfluss erfolgt daher in der leitfähigen Schicht der Gasdiffusionselektrode 1 hin zur Dichtung 4 und von der Dichtung 4 in die Dichtung 5. Die Dichtung 5 leitet den Strom in die Fließplatte 2, welche in Kontakt mit der Anode 6 der nächsten Dreikammerzelle ist. Der Stromfluss zwischen Fließplatte 2 und Anode 6 erfolgt bevorzugt über die Flüssigkeitsleitstruktur der Fließplatte 2.

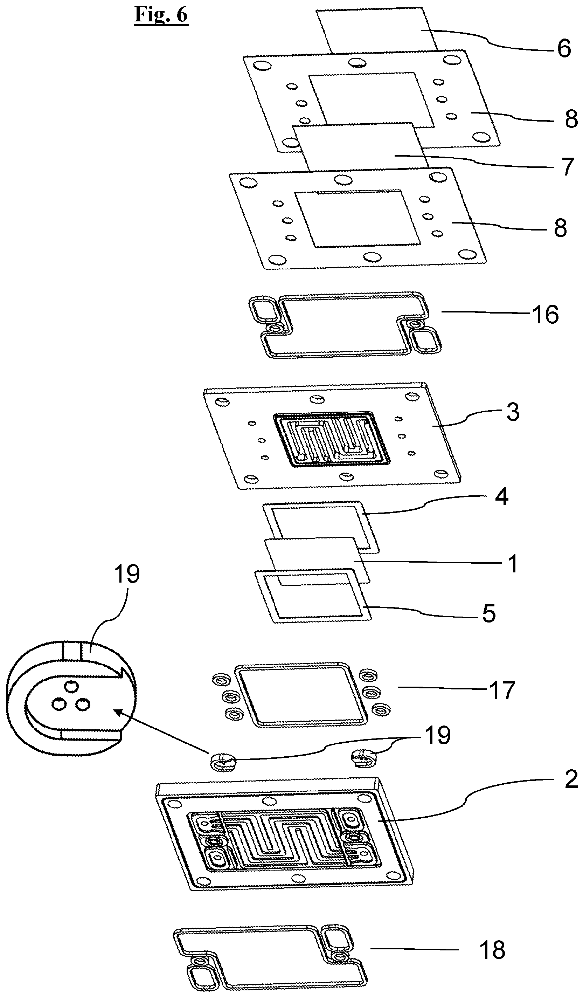

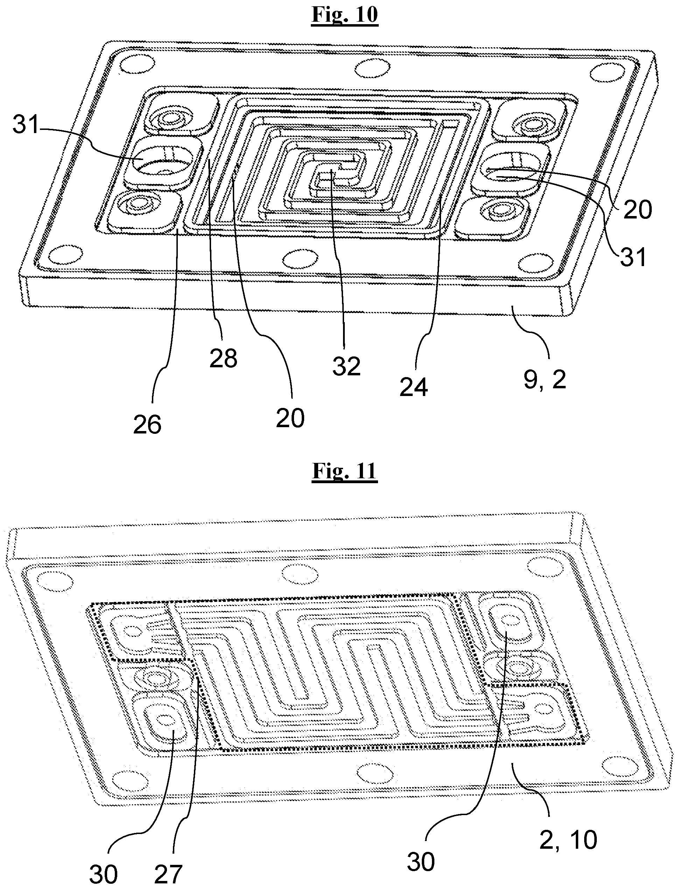

Während die Fig. 1-5 nur den Kernbereich der Dreikammerzellen veranschaulichen, sind in den Fig. 6-13 auch die vertikal durch die Zelle bzw. den Stapel verlaufenden Durchleitungen für das Gas, den Anolyt und den Katholyt dargestellt. Zudem in Fig. 6-9 dargestellt sind zusätzliche Dichtungssätze 16, 17, 18 zum Abdichten dieser Durchleitungen. Die Fließplatte 2 und der Fließrahmen 3 der Fig. 6-9 sind in den Fig. 10-13 vergrößert dargestellt.

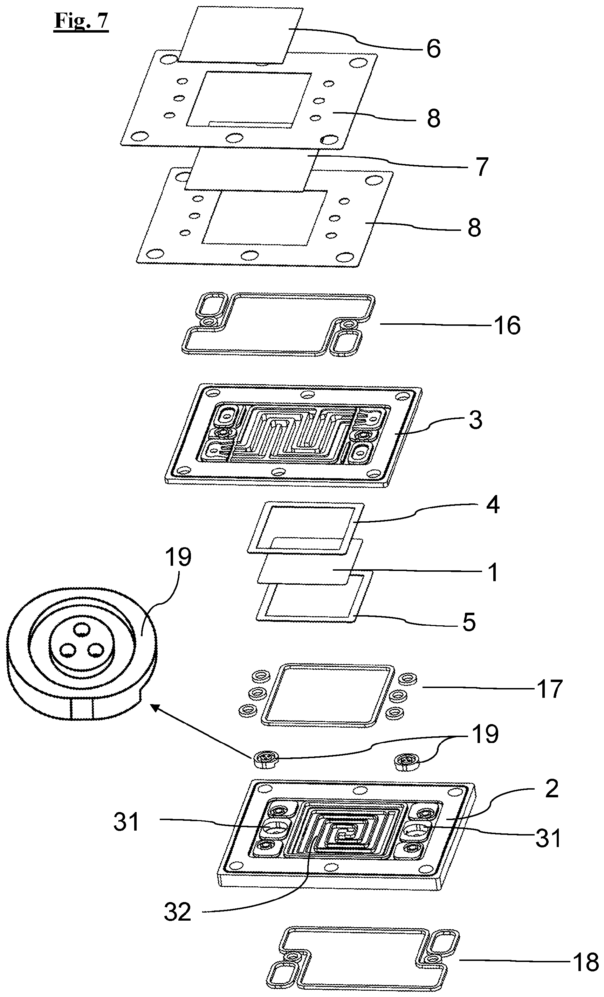

Die Fig. 6, 8 und 11 bieten einen Blick auf die Anolyt-Leitstruktur der Fließplatte 2. Die Fig. 7, 9 und 10 bieten einen Blick auf die Gas-Leitstruktur der Fließplatte 2.

Die Fig. 6, 8 und 13 bieten einen Blick auf die der Gasdiffusionselektrode 1 zugewandte Seite des Fließrahmens 3. Die Fig. 7, 9 und 12 bieten einen Blick auf die der Membran 7 zugewandte Seite des Fließrahmens 3.

Im dargestellten Beispiel der Fig. 6-9 erfolgen die Flüsse des Gases und der beiden Flüssigkeiten parallel durch den Stapel, da die Fließplatte 2, der Fließrahmen 3 und die Dichtungen 8 jeweils zwei senkrecht durch den Stapel verlaufende Durchleitungen für das Gas und jede der Flüssigkeiten aufweisen. Ein oder mehrere Flüsse ausgewählt aus den Flüssen des Gases und der beiden Flüssigkeiten kann auch seriell durch den Stapel erfolgen, wenn eine der senkrecht durch den Stapel verlaufende Durchleitungen für das Gas und die Flüssigkeiten an einem der genannten Elemente vorschlossen oder nicht vorhanden ist.

Die Auswahl zwischen parallelem Fluss und seriellem Fluss kann über Inserts 19 erfolgen, welche in einer Ausführung mit einer Durchleitung versehen sind und in einer zweiten Ausführung ohne Durchleitung versehen sind. Ein solches Insert 19 liegt wie veranschaulicht besonders bevorzugt für die Gaskanäle vor. Das dargestellte Insert 19 hat zudem die Aufgabe eine Verbindung der Durchleitung der Fließplatte 2 zur Gasleitstruktur 32 der Fließplatte 2 zu schaffen. Das Insert 19 weist dazu eine Öffnung oder Ausnehmung auf, welche in Richtung der Gasleitstruktur 32 ausgerichtet ist. Von einer Innenwand des Aufnahmeraums 31 für das Insert 19 verläuft zumindest eine Gasleitbohrung 20 (oder eine andere Öffnung, welche nicht durch Bohren hergestellt ist) bis zu einer Wand der Gasleitstruktur 32. Durch diese Gasleitbohrung 20 im Material der Fließplatte 2 ist somit ein horizontaler Gaskanal zwischen der Durchleitung und der Gasleitstruktur 32 gebildet.

Das Insert 19 kann eine Vertiefung für ein Dichtelement des Dichtungssatz 17 aufweisen. Alternativ kann ein Dichtelement des Dichtungssatz 17 rund um das Insert 19 in einer Vertiefung der Fließplatte 2 vorliegen.

Die dargestellten Inserts 19 weisen alle eine Durchleitung auf. Ein Insert 19 ohne Durchleitung weist ein geschlossenes Dach auf (ohne die drei Bohrungen, wobei bei dieser Art von Insert auch die Vertiefung im Insert für den O-Ring nicht benötigt wird).

Das Insert 19 wird bevorzugt, da dieses die Herstellung der Fließplatte 2 erleichtert. Anstelle des Inserts könnte aber auch nur eine Durchleitung für das Gas an der Fließplatte 2 vorhanden sein, von welcher ein horizontaler Gaskanal zur Gasleitstruktur 32 verläuft.

Die Mündung des horizontalen Gaskanals liegt zwischen dem Grund der Gasleitstruktur 32 und der Gasdiffusionselektrode 1.

Die Fließplatte 2 weist einen Aufnahmevertiefung für die Gasdiffusionselektrode 1 mit deren Dichtungen 4, 5 auf. Diese ragen somit nicht bis an den Außenumfang der Zelle bzw. des Stapels. Die Aufnahmevertiefung ist von einer umlaufenden Erhebung 28 der Fließplatte 2 begrenzt.

Den Boden der Aufnahmevertiefung bilden die oberen Flächen der Stege der Gasleitstruktur 32 und die rund um die Gasleitstruktur 32 vorliegende Auflagefläche für die Gasdiffusionselektrode 1 mit deren Dichtungen 4, 5. Die oberen Flächen der Stege und Auflagefläche können dabei in einer gemeinsamen zweiten Ebene liegen. Der Grund der Gasleitstruktur 32 liegt auf einer ersten Ebene unterhalb der zweiten Ebene. An der Auflagefläche liegt im dargestellten Beispiel ein einfacher Steg 24 vor, zur Verbesserung der Dichtwirkung. Die umlaufende Erhebung 28 der Fließplatte 2 liegt um die Auflagefläche herum vor, wobei die obere Fläche der Erhebung 28 auf einer dritten Ebene oberhalb der zweiten Ebene liegt. Die Erhebung 28 ist bevorzugt von einer Vertiefung 26 umgeben, deren Grund auf der zweiten Ebene oder einer weiteren Ebene liegen kann.

Um die Erhebung 28 verlauft bevorzugt ein Dichtelement (insb. rechteckiger Dichtring) des Dichtungssatzes 17. Der Dichtungssatz 17 umfasst bevorzugt zudem je ein Dichtelement (insb. O-Ring), welches um die jeweilige Durchleitung vorliegt. Bevorzugt weist die Fließplatte 2 um die jeweilige Durchleitung herum eine Vertiefung für das jeweilige Dichtelement auf. Wie dargestellt, kann jene Vertiefung 26, welche die Erhebung 28 umläuft auch einen Vorsprung der jeweiligen Durchleitung umlaufen, dies ist aber optional. Anstelle des dargestellten rechteckigen Dichtelements des Dichtungssatzes 17 könnte auch ein Dichtelement vorliegen, welche entsprechend der Form der gesamten dargestellten Vertiefung 26 vorliegt, sodass das Dichtelement die Erhebung 28 und jede Durchleitung einzeln umschließt. In diesem Fall könnte auf die einzelnen Dichtelemente (insb. O-Ring) des Dichtungssatzes 17 verzichtet werden.

Außen um die genannte Vertiefung 26 liegt ein rahmenförmiger Auflagebereich für den Fließrahmen 3 vor.

An diesem Auflagebereich liegen mehrere Durchtrittsöffnungen, insbesondere sechs Durchtrittsöffnungen, für Befestigungsmittel, insbesondere Gewindebolzen oder Schrauben vor. Außen um diese Durchtrittsöffnungen kann eine umlaufende Rille im Auflagebereich vorliegen. Die Fläche des Auflagebereiches liegt bevorzugt in der dritten Ebene.

Das in den Fig. 6-9 vergrößert dargestellte Insert 19 kann aus dichtendem Material und größer als der Aufnahmeraum 31 für das Insert vorliegen, sodass dieses dichtend in den Aufnahmeraum 31 eingepresst werden kann. Alternativ kann das Insert 19 mit gasdichtem Kleber oder einem aushärtenden Epoxid in den Aufnahmeraum 31 eingeklebt werden. Eine andere Möglichkeit ist ein Dichtelement, welches um das Insert 19 herum an der Fließplatte 2 vorliegt, beispielsweise im Ringraum, welchen die Vertiefung 26 um den Vorsprung bildet, an welchem der Aufnahmeraum 31 vorliegt.

Die Gasleitstruktur 32 ist im Beispiel als geschlossene Struktur ausgeführt, sodass der Gasfluss über die Stege der Struktur hinweg erfolgen muss, also zwischen der Oberfläche der Stege und der Gasdiffusionselektrode 1. Alternativ kann die Struktur auch ein oder mehrere durchgehende Verbindungen zwischen den beiden gegenüberliegenden Gasleitbohrungen 20 bilden.

Bevorzugt wird, dass die jeweilige Gas-Durchleitung zwischen den Durchleitungen der Flüssigkeiten liegt. Bevorzugt wird, dass die Durchleitungen entlang zweier gegenüberliegender Kanten einer quadratischen oder rechteckigen Fließplatte 2 vorliegen, bevorzugt an der kürzeren Kante einer rechteckigen Fließplatte 2.

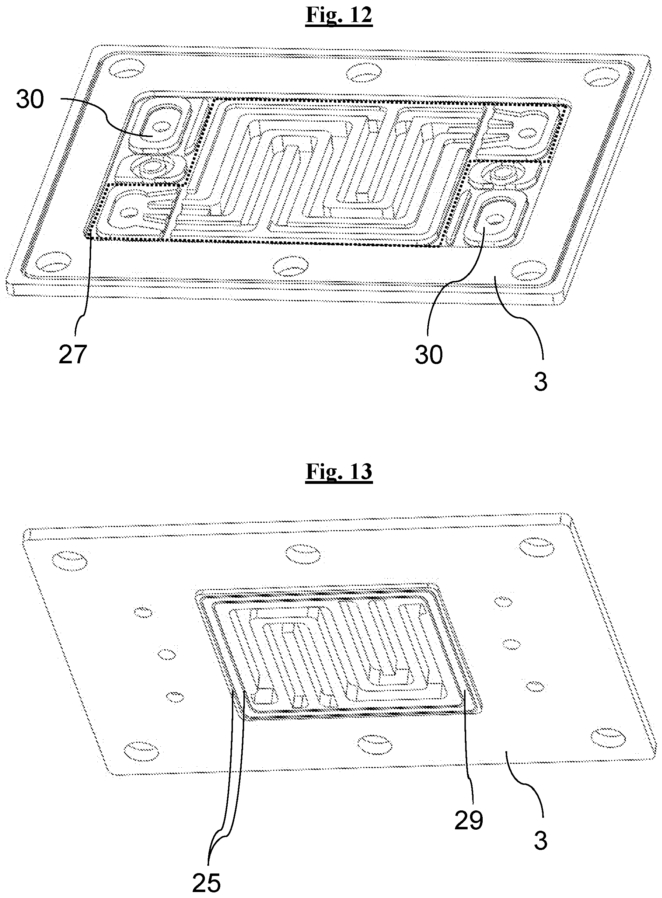

In Fig. 13 ist die der Fließplatte 2 zugewandt liegende Seite des Fließrahmens 3 dargestellt. Diese umfasst eine erste Fläche, welche am Auflagebereich und der Erhebung 28 der Fließplatte 2 zur Anlage kommt. Die Dichtelemente des Dichtungssatz 17 werden dabei in die für das jeweilige Dichtelement vorgesehene Vertiefung gepresst. Im inneren Bereich der ersten Fläche liegt eine zweite Fläche vor, welche gegenüber der ersten Fläche erhaben ist und somit einen erhabenen Bereich 29 bildet. Der erhabene Bereich 29 findet in der Aufnahmevertiefung der Fließplatte 2 Platz und presst die Dichtungen 4, 5 gegen den Auflagefläche der Fließplatte 2. Der erhabene Bereich 29 weist einen rahmenförmigen äußeren Bereich auf, welcher die Katholytleitstruktur des Fließrahmens 3 umschließt. In diesem äußeren Bereich liegt bevorzugt ein umlaufender Steg, insbesondere ein umlaufender Doppelsteg 25 vor, um die Dichtwirkung zu verbessern. Die Katholytleitstruktur ist durch eine oder mehrere Kanäle gebildet, wobei zumindest einer der Kanäle als Durchgangsöffnung durch den Fließrahmen 2 hindurch ausgeführt ist, oder mit Durchgangsöffnungen versehen ist. In Fig. 13 sind jene Kanäle sichtbar, welche sich vollständig durch den Fließrahmen 2 erstrecken. In Fig. 12 sind weitere Kanäle sichtbar, welche einen Nutgrund aufweisen.

Der Fließrahmen 3 weist bevorzugt einen identen Außenumfang bzw. eine idente Größe wie die Fließplatte 2 auf. Der Fließrahmen 3 umfasst korrespondierend zur Fließplatte 2 mehrere Durchtrittsöffnungen, insbesondere sechs Durchtrittsöffnungen, für Befestigungsmittel, insbesondere Gewindebolzen oder Schrauben. Die Befestigungsmittel sind aus nicht-leitfähigem Material gebildet, oder liegen in Hülsen aus nicht-leitfähigem Material vor.

Die der Anode 6 zugewandte Seite des Fließrahmes 3 (Fig. 12) und der Fließplatte 2 (Fig. 11) können nahezu ident zueinander ausgeführt sein, mit dem Unterschied, dass die Katholytleitstruktur des Fließrahmes 3 Durchgangsöffnungen aufweist und die Anolytleitstruktur der Fließplatte 2 einen geschlossenen Grund aufweist. Die beiden genannten Seiten können aber auch unterschiedlich zueinander ausgeführt sein.

Die Katholytleitstruktur des Fließrahmes 3 weist beidseits eine Verbindung zu den spiegelgleich (nicht dargestellt, aber optional möglich) oder diagonal (wie dargestellt) gegenüberliegenden Durchleitungen des Katholyten auf.

Die Anolytleitstruktur der Fließplatte 2 weist beidseits eine Verbindung zu den spiegelgleich (nicht dargestellt, aber optional möglich) oder diagonal (wie dargestellt) gegenüberliegenden Durchleitungen des Anolyten auf.

Die dargestellte Nut, welche zwischen der jeweiligen Durchleitung und der jeweiligen Struktur quer zu den (wie dargestellt je drei) horizontalen Kanälen vorliegt, ist optional.

Die jeweilige Leitstruktur und die beiden mit dieser verbundenen Durchleitungen sind von einer Vertiefung 27 umlaufen, in welcher das entsprechend geformte Dichtelement des Dichtungssatzes 18 oder des Dichtungssatzes 16 eingesetzt wird. Um den Verlauf der Vertiefung 27 zu veranschaulichen ist dieser punktiert dargestellt.

Um die vier nicht benötigten Durchleitungen liegen weitere Dichtelemente des Dichtungssatzes 18 oder des Dichtungssatzes 16 vor. Alternativ kann ein einzelnes Dichtelement drei oder fünf der dargestellten Dichtelement mitumfassen (zb. indem die jeweilige von einem Dichtelement umschlossene Öffnung aus einem flächigen Dichtelement ausgestanzt oder ausgeschnitten wird).

Das Vorsehen von eigenen Dichtelementen je Flüssigkeit und/oder für das Gas hat den Vorteil, dass das Material der Dichtung gezielt an das Medium angepasst werden kann.

Die Dichtungen der Dichtungssätze 16 und 18 können ident zueinander ausgeführt sein.

Um die beiden jeweils nicht benötigen Durchleitungen der anderen Flüssigkeit kann wie dargestellt ein Aufnahmeraum 30 für ein Verschlusselement vorliegen. Wird ein solches Verschlusselement in einem der beiden Aufnahmeräume platziert wird ein serieller Fluss der Flüssigkeit durch die Zelle erreicht.

Außen um die Durchtrittsöffnungen für Befestigungsmittel kann eine umlaufende Rille vorliegen.

Die in Fig. 11 und 12 dargestellten Seiten der Fließplatte 2 und des Fließrahmens 3 liegen beim zusammengesetzten Stapel einander gegenüber, wobei dazwischen die Membran 7 mit deren Dichtungen 8 und die Anode 6 vorliegen. Die Anode 6, welche üblicherweise aus porösem Material besteht, liegt an der Anolytleitstruktur der Fließplatte 2 an. Je nach Dicke der Anode 6 kann die Ebene der oberen Flächen der Stege der Anolytleitstruktur gegenüber der äußeren rahmenförmigen Fläche der Fließplatte 2 vertieft vorliegen.

Die Dichtungen 8 ragen bevorzugt bis an den Außenumfang der Zelle, wobei die Dichtungen 8 jeweils Durchtrittsöffnungen für Befestigungsmittel aufweisen und je zwei Durchleitungen für jedes der Medien (Anolyt, Katholyt, Gas).

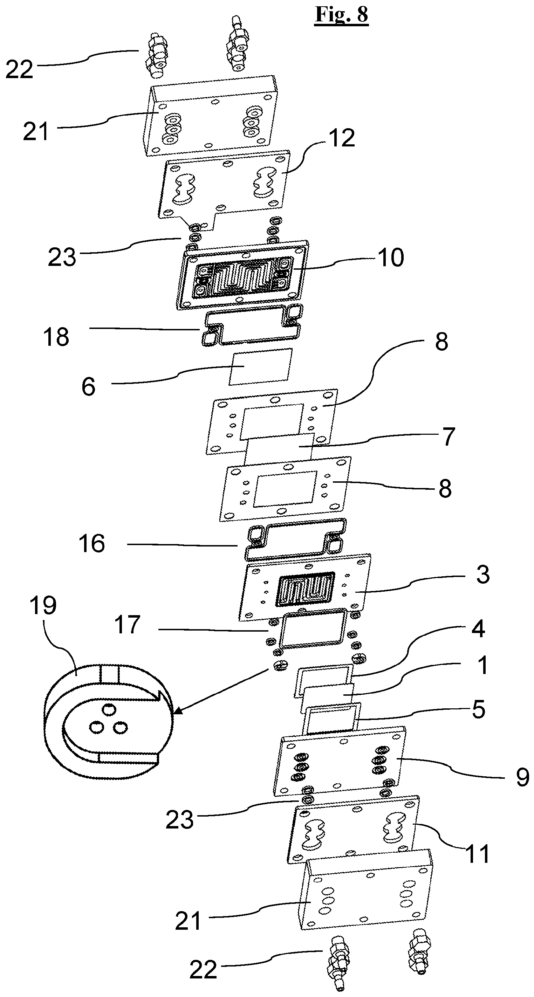

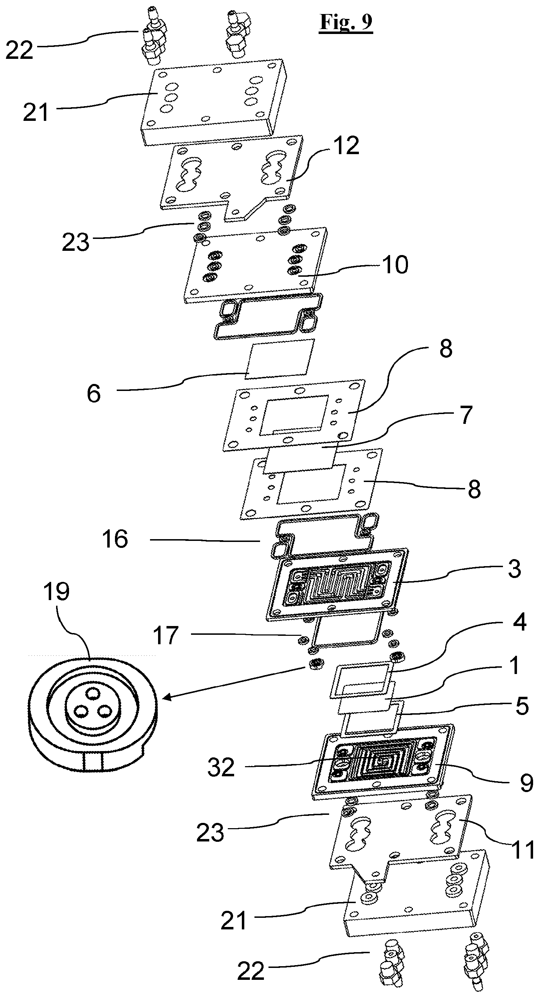

In Fig. 8 und 9 sind schließlich noch jene Komponenten veranschaulicht, welche den Stapel an den beiden Enden begrenzen. Der dargestellte Stapel umfasst aus Gründen der Übersichtlichkeit nur eine Dreikammerzelle, wobei dieser durch das Hinzufügen von Wiederholeinheit erweiterbar ist.

An einem Ende des Stapels ist eine Kathodenendplatte 9 angeordnet, deren der Gasdiffusionselektrode 1 zugewandten Seite wie in Fig. 10 dargestellt und zu dieser beschrieben ausgeführt ist.

Am anderen Ende des Stapels ist eine Anodenendplatte 10 angeordnet, deren der Anode 6 zugewandte Seite wie in Fig. 11 dargestellt und zu dieser beschrieben ausgeführt ist.

Die jeweils andere Seite der Kathodenendplatte 9 und Anodenendplatte 10 kann flach ausgeführt sein, wobei um die Durchleitungen Vertiefungen für die Abschlussdichtungen 23 vorliegen können. Bevorzugt sind die Abschlussdichtungen 23 einzelne O-Ringe für jede der Durchleitungen. An den den Zellen abgewandten Seiten der Endplatten 9, 10 liegt jeweils ein flächiger Stromabnehmer 11, 12 vor, welcher aus einem leitfähigen Material, beispielsweise Kupfer oder Aluminium, besteht. Der jeweilige Stromabnehmer 11, 12 weist bevorzugt eine Anschlusszunge auf, welche seitlich aus dem Stapel hervorragt. Die Stromabnehmer 11, 12 weisen Öffnungen für die Durchleitungen und deren Dichtungen auf.

Außen an den Stromabnehmern 11, 12 liegen Abschlussplatten 21 vor, bevorzugt aus nicht-leitendem Material. Die Abschlussplatten 21 können Erhebungen aufweisen, welche durch die Stromabnehmer 11, 12 auf die Abschlussdichtungen 23 drücken. An der Außenseite weisen die Abschlussplatten 21 Öffnungen zum Einsetzen von Anschlüssen und Verschlüssen 22 auf. Die Anschlüsse und Verschlüsse 22 können in die Abschlussplatten 21 eingepresst, eingeklebt oder eingeschraubt werden. An den Anschlüssen können Schlauch- oder Rohrleitungen angeschlossen werden. Die Verschlüsse dienen dazu um Durchleitungen endseitig abzudichten. An jeder Seite des Stapels werden drei Anschlüsse und drei Verschlüsse platziert, sodass das jeweilige Medium von einem Einlass an einer ersten Seite des Stapels zu einem Auslass an einer zweiten Seite des Stapels erfolgt. Die Medien können den Stapel in der gleichen Richtung oder entgegengesetzt durchfließen.

Das Verwenden von Abschlussplatten 21 mit je zwei Durchleitungen für jedes Medium hat den Vorteil, dass die Anschlüsse und Verschlüsse 22 entsprechend der im Stapel vorgesehenen Flussweise (parallel oder seriell) platziert werden können.

Weniger bevorzugt können auch spezifische Abschlussplatten 21 und/oder Endplatten 9, 10 verwendet werden, welche je nur eine Durchleitung für jedes Medium aufweisen und somit die frei platzierbaren Verschlüsse ersetzen.

Die Endplatten 9, 10 und Stromabnehmer 11, 12 und Abschlussplatten 21 weisen Durchtrittsöffnungen für die Befestigungsmittel auf.

Die Befestigungsmittel sind nicht dargestellt. Diese durchlaufen jeweils den gesamten Stapel. Die Befestigungsmittel können beidseits ein Gewinde aufweisen, oder mit Kopf und Gewinde ausgestattet sein. Die Befestigungsmittel könnten auch Bestandteil einer der Abschlussplatten 21 sein, oder in eine dieser eingeschraubt sein und am anderen Ende die zweite Abschlussplatte durchragen.

Diese Art der Befestigung bzw. des Zusammenpressens des Stapels ist bevorzugt. Andere Arten sollen aber nicht ausgeschlossen werden. Beispielsweise könnte auf die Durchtrittsöffnungen verzichtet werden und der Stapel durch externe Verspannungsmittel zusammengedrückt werden. Die externen Verspannungsmittel können von einer Abschlussplatte 21 zur anderen Abschlussplatte 21 und zwar außerhalb des Außenumfangs der Dreikammerzellen verlaufen, wobei in diesem Fall die Abschlussplatten 21 die Dreikammerzellen horizontal überragen müssen.

## Patentansprüche

1. Dreikammerzelle, welche die Bildung eines Dreikammerzellstapels mit in Reihe geschalteten Dreikammerzellen ermöglicht, wobei die Dreikammerzelle eine Gasdiffusionselektrode (1), eine Fließplatte (2), einen Fließrahmen (3) zumindest eine elektrisch leitende Dichtung (4, 5), eine Anode (6) und eine Membran (7) umfasst, **dadurch gekennzeichnet, dass** die leitende Dichtung (4, 5) beidseits an der Gasdiffusionselektrode (1) vorliegt, wobei die beiden Seiten der Dichtung (4, 5) in elektrisch leitendem Kontakt zueinander stehen und wobei die Dichtung (4, 5) an einer Seite der Fließplatte (2) anliegt, wobei an der gegenüberliegenden Seite der Fließplatte (2) eine Anlagestelle für die Anode (6) einer nachfolgenden Dreikammerzelle vorliegt und wobei die Anlagestelle über die Fließplatte (2) in elektrisch-leitendem Kontakt mit der Dichtung (4, 5) steht.

2. Dreikammerzelle nach Anspruch 1, **dadurch gekennzeichnet, dass** die Fließplatte (2) zur Gänze aus elektrisch leitendem Material besteht.

3. Dreikammerzelle nach einem der Ansprüche 1 bis 2, **dadurch gekennzeichnet, dass** an der der Gasdiffusionselektrode (1) zugewandt liegenden Seite der Fließplatte (2) eine Vertiefung vorliegt, in welcher die Gasdiffusionselektrode (1) mit deren Dichtungen (4, 5) Platz findet und wobei am Grund der Vertiefung eine Gasleitstruktur (32) vorliegt.

4. Dreikammerzelle nach einem der Ansprüche 1 bis 3, **dadurch gekennzeichnet, dass** an der der Anode (6) zugewandt liegenden Seite der Fließplatte (2) eine Vertiefung vorliegt, in welcher die Anode (6) Platz findet und wobei am Grund der Vertiefung eine Flüssigkeitsleitstruktur vorliegt.

5. Dreikammerzelle nach einem der Ansprüche 1 bis 4, **dadurch gekennzeichnet, dass** die elektrisch leitfähige Dichtung aus zwei die Gasdiffusionselektrode (1) umlaufenden Dichtungen (4, 5) besteht, welche die Gasdiffusionselektrode (1) in Umfangsrichtung überragen und im Bereich außerhalb der Gasdiffusionselektrode (1) miteinander verbunden sind, wobei der äußere Randbereich der Gasdiffusionselektrode (1) zwischen den beiden Dichtungen (4, 5) eingeschlossen ist.

6. Dreikammerzelle nach einem der Ansprüche 1 bis 5, **dadurch gekennzeichnet, dass** der Fließrahmen (3) gegenüber der Fließplatte (2) an der Dichtung (4, 5) anliegt, wobei der Fließrahmen (3) einen erhabenen Bereich (29) aufweist, welcher in die Vertiefung der Fließplatte (2) ragt, in welcher die Gasdiffusionselektrode (1) mit der Dichtung (4, 5) vorliegt.

7. Dreikammerzelle nach einem der Ansprüche 1 bis 6, **dadurch gekennzeichnet, dass** die der Gasdiffusionselektrode (1) zugewandte Seite der Fließplatte (2) zumindest drei Ebenen umfasst, wobei die unterste erste Ebene durch den Grund einer Gasleitstruktur (32) gebildet ist, wobei die mittlere zweite Ebenen eine die Gasleitstruktur (32) umlaufende Auflagefläche für die Gasdiffusionselektrode (1) und deren Dichtung (5) umfasst, wobei die dritte obere Ebene die äußere Fläche einer Erhebung (28) umfasst, welche die Auflagefläche umläuft.

8. Dreikammerzelle nach Anspruch 7, **dadurch gekennzeichnet, dass** die Erhebung (28) von einer Vertiefung (26) umgeben ist.

9. Dreikammerzelle nach einem der Ansprüche 7 bis 8, **dadurch gekennzeichnet, dass** die obere Fläche von Stegen der Gasleitstruktur (32) in der mittleren zweiten Ebene liegt.

10. Dreikammerzelle nach einem der Ansprüche 7 bis 9, **dadurch gekennzeichnet, dass** die Fließplatte (2) zwei Durchleitungen für Gas umfasst, wobei ausgehend von jeder Durchleitung zumindest ein horizontaler Gasleitkanal in die Gasleitstruktur (32) führt.

11. Dreikammerzelle nach Anspruch 10, **dadurch gekennzeichnet, dass** an den beiden Durchleitungen für Gas jeweils ein Aufnahmeraum (31) für ein Insert (19) vorliegt, wobei der jeweilige horizontale Gasleitkanal vom Aufnahmeraum (31) zur Gasleitstruktur (32) führt und wobei das Insert (19) eine Verbindung von der vertikalen Durchleitung zum horizontaler Gasleitkanal umfasst.

12. Dreikammerzelle nach Anspruch 11, **dadurch gekennzeichnet, dass** zwei Arten von Inserts einsetzbar sind, wobei die erste Art ein geschlossenes Dach aufweist, sodass die Durchleitung zur nächsten Zelle verschlossen ist und die zweite Art zumindest eine Öffnung im Dach aufweist, sodass die Durchleitung zur nächsten Zelle offen ist.

13. Dreikammerzelle nach einem der Ansprüche 1 bis 12, **dadurch gekennzeichnet, dass** die Fließplatte (2) und der Fließrahmen (3) Durchleitungen für den Anolyt, den Katholyt und das Gas umfassen, welche horizontal gesehen außerhalb jenes Bereichs der Fließplatte (2) vorliegen, in welchem die Gasdiffusionselektrode (1) vorliegt.

14. Dreikammerzelle nach Anspruch 13, **dadurch gekennzeichnet, dass** die Membran (7) zwischen zwei Dichtungen (8) vorliegt, wobei die Dichtungen (8) Durchleitungen für den Anolyt, den Katholyt und das Gas umfassen, welche horizontal gesehen außerhalb jenes Bereichs der Fließplatte (2) vorliegen, in welchem die Gasdiffusionselektrode (1) vorliegt.

15. Dreikammerzellstapel, **dadurch gekennzeichnet, dass** dieser aus mehreren Dreikammerzellen nach einem der Ansprüche 1-14 zusammengesetzt ist.

16. Dreikammerzellstapel nach Anspruch 15, **dadurch gekennzeichnet, dass** die Fließplatte (2) einer ersten der beiden äußersten Dreikammerzellen durch eine Kathodenendplatte (9) ersetzt ist und die Fließplatte (2) der zweiten der beiden äußersten Dreikammerzellen durch eine Anodenendplatte (10) ersetzt ist.

17. Verwendung eines Dreikammerzellstapels nach Anspruch 15 oder 16 als Reaktor zur Elektrokatalyse.

## Claims

1. A three-chamber cell that enables the formation of a three-chamber cell stack with three-chamber cells connected in series, wherein the three-chamber cell includes a gas diffusion electrode (1), a flow plate (2), a flow frame (3), at least one electrically conductive seal (4, 5), an anode (6) and a membrane (7), **characterized in that** the conductive seal (4, 5) is provided on both sides of the gas diffusion electrode (1), wherein the two sides of the seal (4, 5) are in electrically conductive contact with each other, and wherein the seal (4, 5) lies against one side of the flow plate (2), wherein on the opposite side of the flow plate (2) a contact area is provided for the anode (6) of a subsequent three-chamber cell, and wherein the contact area is in electrically conductive contact with the seal (4, 5) via the flow plate (2).

2. A three-chamber cell according to claim 1, **characterized in that** the flow plate (2) consists entirely of electrically conductive material.

3. A three-chamber cell according to one of claims 1 to 2, **characterized in that**, on the side of the flow plate (2) that faces the gas diffusion electrode (1), a recess is provided that accommodates the gas diffusion electrode (1) and its seals (4, 5), wherein a gas-conducting structure (32) is provided at the base of the recess.

4. A three-chamber cell according to one of claims 1 to 3, **characterized in that**, on the side of the flow plate (2) that faces the anode (6), a recess is provided that accommodates the anode (6), wherein a liquid-conducting structure is provided at the base of the recess.

5. A three-chamber cell according to one of claims 1 to 4, **characterized in that** the electrically conductive seal consists of two seals (4, 5) which extend around the gas diffusion electrode (1), which protrude beyond the gas diffusion electrode (1) in the peripheral direction, and which are connected to each other in the area outside the gas diffusion electrode (1), wherein the outer edge area of the gas diffusion electrode (1) is enclosed between the two seals (4, 5).

6. A three-chamber cell according to one of claims 1 to 5, **characterized in that** the flow frame (3) facing the flow plate (2) lies against the seal (4, 5), wherein the flow frame (3) includes a raised area (29) that projects into the recess of the flow plate (2) in which the gas diffusion electrode (1) with the seal (4, 5) is provided.

7. A three-chamber cell according to one of claims 1 to 6, **characterized in that** the side of the flow plate (2) that faces the gas diffusion electrode (1) includes at least three planes, wherein the lowest first plane is formed by the base of a gas-conducting structure (32), wherein the middle second plane includes a winding support surface (32) for the gas diffusion electrode (1) and its seal (5), wherein the third, upper plane includes the outer surface of a projection (28) that extends around the support surface.

8. A three-chamber cell according to claim 7, **characterized in that** the projection (28) is surrounded by a recess (26).

9. A three-chamber cell according to one of claims 7 to 8, **characterized in that** the upper surface of walls of the gas-conducting structure (32) lies in the middle, second plane.

10. A three-chamber cell according to one of claims 7 to 9, **characterized in that** the flow plate (2) includes two conduits for gas, wherein at least one horizontal gas-conducting channel leads from each conduit into the gas-conducting structure (32).

11. A three-chamber cell according to claim 10, **characterized in that** a receiving space (31) is respectively provided for an insert (19) at both conduits for gas, wherein the respective horizontal gas-conducting channel leads from the receiving space (31) to the gas-conducting structure (32) and wherein the insert (19) includes a connection from the vertical conduit to the horizontal gas-conducting channel.

12. A three-chamber cell according to claim 11, **characterized in that** two types of inserts can be used, wherein the first type has a closed roof so that the conduit to the next cell is closed, and the second type has at least one opening in its roof so that the conduit to the next cell is open.

13. A three-chamber cell according to one of claims 1 to 12, **characterized in that** the flow plate (2) and the flow frame (3) include conduits for the anolyte, the catholyte and the gas, which conduits are provided in a horizontal view outside the area of the flow plate (2) in which the gas diffusion electrode (1) is provided.

14. A three-chamber cell according to claim 13, **characterized in that** the membrane (7) is provided between two seals (8), wherein the seals (8) include conduits for the anolyte, the catholyte and the gas, which conduits are provided in a horizontal view outside the area of the flow plate (2) in which the gas diffusion electrode (1) is provided.

15. A three-chamber cell stack consisting of a plurality of three-chamber cells according to one of claims 1-14.

16. A three-chamber cell stack according to claim 15, **characterized in that** the flow plate (2) of a first of the two outermost three-chamber cells is replaced by a cathode end plate (9) and the flow plate (2) of the second of the two outermost three-chamber cells is replaced by an anode end plate (10).

17. Use of a three-chamber cell stack according to claim 15 or 16 as a reactor for electrocatalysis.

## Revendications

1. Cellule à trois chambres, laquelle permet la formation d'un empilement de cellules à trois chambres avec des cellules à trois chambres montées en série, sachant que la cellule à trois chambres comprend une électrode de diffusion de gaz (1), une plaque d'écoulement (2), un cadre d'écoulement (3), au moins un joint d'étanchéité électroconducteur (4, 5), une anode (6) et une membrane (7) **caractérisée en ce que** le joint électroconducteur (4, 5) est présent des deux côtés sur l'électrode de diffusion de gaz (1), sachant que les deux côtés du joint d'étanchéité (4, 5) sont en contact électroconducteur l'un avec l'autre et sachant que le joint d'étanchéité (4, 5) s'applique à un côté de la plaque d'écoulement (2), sachant qu'un point d'application pour l'anode (6) d'une cellule à trois chambres suivante est présent sur le côté opposé de la plaque d'écoulement (2) et sachant que le point d'application est en contact électroconducteur avec le joint d'étanchéité (4, 5) par le biais de la plaque d'écoulement (2).

2. Cellule à trois chambres selon la revendication 1, **caractérisée en ce que** la plaque d'écoulement (2) est composée entièrement d'un matériau électroconducteur.

3. Cellule à trois chambres selon l'une quelconque des revendications 1 à 2, **caractérisée en ce qu'**une cavité est présente sur le côté de la plaque d'écoulement (2) situé tourné vers l'électrode de diffusion de gaz (1), dans laquelle trouve place l'électrode de diffusion de gaz (1) avec ses joints d'étanchéité (4, 5) et sachant qu'une structure conductrice de gaz (32) se trouve au fond de la cavité.

4. Cellule à trois chambres selon l'une quelconque des revendications 1 à 3, **caractérisée en ce qu'**une cavité est présente sur le côté de la plaque d'écoulement (2) situé tourné vers l'anode (6), dans laquelle trouve place l'anode (6) et sachant qu'une structure conductrice de liquide se trouve au fond de la cavité.

5. Cellule à trois chambres selon l'une quelconque des revendications 1 à 4, **caractérisée en ce que** le joint d'étanchéité électroconducteur est composé de deux joints d'étanchéité (4, 5) entourant l'électrode de diffusion de gaz (1), lesquels dépassant l'électrode de diffusion de gaz (1) dans le sens périphérique et sont reliés entre eux dans la zone en dehors de l'électrode de diffusion de gaz (1), sachant que la zone de bordure extérieure de l'électrode de diffusion de gaz (1) est englobée entre les deux joints d'étanchéité (4, 5).

6. Cellule à trois chambres selon l'une quelconque des revendications 1 à 5, **caractérisée en ce que** le cadre d'écoulement (3) en face de la plaque d'écoulement (2) s'applique au joint d'étanchéité (4, 5), sachant que le cadre d'écoulement (3) comporte une zone saillante (29), laquelle dépasse dans la cavité de la plaque d'écoulement (2), dans laquelle se trouve l'électrode de diffusion de gaz (1) avec le joint d'étanchéité (4, 5).

7. Cellule à trois chambres selon l'une quelconque des revendications 1 à 6, **caractérisée en ce que** le côté de la plaque découlement (2) tourné vers l'électrode de diffusion de gaz (1) comprend au moins trois plans, sachant que le premier plan le plus bas est formé par le fond d'une structure conductrice de gaz (32), sachant que le deuxième plan médian comprend une surface d'appui pour l'électrode de diffusion de gaz (1) entourant la structure conductrice de gaz (32) et son joint d'étanchéité (5), sachant que le troisième plan supérieur comprend la surface extérieure d'une élévation (28), laquelle entoure la surface d'appui.

8. Cellule à trois chambres selon la revendication 7, **caractérisée en ce que** l'élévation (28) est entourée d'une cavité (26).

9. Cellule à trois chambres selon l'une quelconque des revendications 7 à 8, **caractérisée en ce que** la surface supérieure des nervures de la structure conductrice de gaz (32) se situe dans le deuxième plan médian.

10. Cellule à trois chambres selon l'une quelconque des revendications 7 à 9, **caractérisée en ce que** la plaque d'écoulement (2) comprend deux passages pour du gaz, sachant qu'en partant de chaque passage au moins un conduit de gaz horizontal mène dans la structure conductrice de gaz (32).

11. Cellule à trois chambres selon la revendication 10, **caractérisée en ce qu'**un espace de réception (31) pour un élément d'insertion (19) se trouve respectivement sur les deux passages pour le gaz, le conduit de gaz horizontal respectif mène de l'espace de réception (31) à la structure conductrice de gaz (32) et sachant que l'élément d'insertion (19) comprend une liaison du passage verticale au conduit de gaz horizontal.

12. Cellule à trois chambres selon la revendication 11, **caractérisée en ce que** deux types d'éléments d'insertion peuvent être utilisés, sachant que le premier type comporte une couverture fermée, de telle sorte que le passage vers la cellule suivante est fermé et le deuxième type comporte au moins une ouverture dans la couverture, de telle manière que le passage vers la cellule suivante est ouvert.

13. Cellule à trois chambres selon l'une quelconque des revendications 1 à 12, **caractérisée en ce que** la plaque d'écoulement (2) et le cadre d'écoulement (3) comprennent des passages pour l'anolyte, le catholyte et le gaz, lesquels sont présents, vus horizontalement en dehors de la zone de la plaque d'écoulement (2), dans laquelle se trouve l'électrode de diffusion de gaz (1).

14. Cellule à trois chambres selon la revendication 13, **caractérisée en ce que** la membrane (7) se trouve entre deux joints d'étanchéité (8), sachant que les joints d'étanchéité (8) comprennent des passages pour l'anolyte, le catholyte et le gaz, lesquels sont présents, vus horizontalement en dehors de la zone de la plaque d'écoulement (2), dans laquelle se trouve l'électrode de diffusion de gaz (1).

15. Empilement de cellules à trois chambres, **caractérisé en ce que** celui-ci est composé de plusieurs cellules à trois chambres selon l'une quelconque des revendications 1-14.

16. Empilement de cellules à trois chambres selon la revendication 15, **caractérisé en ce que** la plaque d'écoulement (2) d'une première des deux cellules à trois chambres extrêmes est remplacée par une plaque finale de cathode (9) et la plaque d'écoulement (2) de la deuxième des deux cellules à trois chambres extrêmes est remplacée par une plaque finale d'anode (10).

17. Utilisation d'un empilement de cellules à trois chambres selon la revendication 15 ou 16 sous la forme d'un réacteur pour électrocatalyse.
